# EUROPEAN PATENT SPECIFICATION

(11) **EP 2 327 945 B1**
(45) Date of publication and mention of the grant of the patent: **06.06.2012**
(21) Application number: 10172406.0
(22) Date of filing: 10.08.2010
(51) Int. Cl.: F27B 9/06, F27B 9/36, F27D 11/02

(54) **Method for manufacturing ceramic fired body and method for manufacturing honeycomb structured body**
Verfahren zur Herstellung eines gebrannten Keramikkörpers und Verfahren zur Herstellung eines wabenförmig strukturierten Körpers
Procédé de fabrication d'un élément cuit en céramique et procédé de fabrication d'un corps structuré en nid d'abeilles

(30) Priority: 25.11.2009 WO PCT/JP2009/069884
(43) Date of publication of application: 01.06.2011
(73) Proprietor: Ibiden Co., Ltd., Ogaki-shi Gifu 503-8604 (JP)
(72) Inventor: Saijo, Takamitsu, 2326 Dunavarsany (HU); Hashimoto, Yoshinori, 2326 Dunavarsany (HU)
(74) Representative: HOFFMANN EITLE

(56) References cited:
- JP-A- 10 281 651
- JP-A- 2006 046 865

## Description

### TECHNICAL FIELD

The present invention relates to a method for manufacturing a ceramic fired body and a method for manufacturing a honeycomb structured body.

### BACKGROUND TO THE INVENTION

In recent years, particulates such as soot in exhaust gases that are discharged from internal combustion engines for vehicles such as a bus and a truck, construction equipment and the like, have raised serious problems as contaminants harmful to the environment and the human body. For this reason, various applications in which honeycomb structured bodies made of porous ceramics are used as filters for capturing particulates in exhaust gases to purify the exhaust gases have been proposed.

As such a honeycomb structured body, for example, there is employed a honeycomb structured body having plural pillar-shaped honeycomb fired bodies combined with one another with an adhesive layer interposed therebetween. Here, the honeycomb fired bodies are manufactured by carrying out extrusion-molding, degreasing, firing or the like on a mixture comprising a ceramic raw material such as silicon carbide.

A honeycomb fired body is manufactured by molding and degreasing a ceramic raw material and firing the resultant honeycomb degreased body in a firing furnace.
JP 2002-193670A and JP 2006-046865A disclose a method for firing a degreased silicon carbide molded body.

JP 2002-193670A discloses a method for firing a silicon carbide molded body in which a pillar-shaped silicon carbide molded body containing a silicon carbide powder, a binder, and a dispersion medium is degreased, and thereafter placed on a firing jig and fired.
JP 2002-193670A specifically discloses a method in which plural layers of firing jigs each with the degreased silicon carbide molded body placed thereon are laminated to form a laminated body, a heater is disposed over the laminated body, an other heater is disposed under the laminated body, and the laminated body is heated with the heater.

JP 2006-046865A discloses a firing furnace used for firing a degreased silicon carbide molded body. Patent Document 2 discloses that in this firing furnace, a muffle is provided in a firing chamber, electrodes are disposed so as to vertically sandwich the muffle, the muffle is heated with resistance heating when electric power is supplied to the muffle, and the firing objects contained in the muffle are fired.
JP 2006-046865A also discloses a method in which a platform member is arranged in a closed-end box firing jig having a lid formed with a conductive material, firing objects are disposed on the platform member, and the firing jigs and the firing objects are energized, and the firing objects are heated. Specific examples of the heating method with energizing heating disclosed in Patent Document 2 are a method in which electrodes are disposed so as to vertically sandwich the muffle, an energizing auxiliary member is disposed between the muffle and the firing jigs, and the firing jigs are energized, and a method in which electrodes are arranged on the left and right of plural lines of firing jigs, and an energizing auxiliary member is disposed between the plural lines of firing jigs, and the firing jigs are energized. JP 10 281 651 A is also referred to.

A ceramic degreased body obtained by molding and degreasing a ceramic raw material can be fired with a firing furnace, a so-called continuous firing furnace.
In the firing with the continuous firing furnace, a firing jig containing a ceramic degreased body is charged into the firing furnace from an input port, the ceramic degreased body is moved in the firing furnace with a transport mechanism such as a belt conveyor.
The temperature of the ceramic degreased body increases when the ceramic degreased body is moved in the firing furnace. When it reaches a predetermined fïring temperature (for example, 2200°C), the temperature of the degreased body is held for a while. Thereafter, the ceramic degreased body is removed from the exit port of the firing furnace.

In the firing method with the continuous firing furnace, the temperature of the ceramic degreased body is desirably raised up to a firing temperature in a short period of time for improvement in manufacturing efficiency.

In the case of using the method of Patent Document 1 in which ceramic degreased bodies are placed in firing jigs in such a continuous firing furnace and vertically heated with heaters, the temperature-rise of the ceramic degreased bodies is problematically late.
Especially problematically, it takes time to raise the temperature of the ceramic degreased bodies in the vicinity of the center of each of the firing jigs distant from the heater with radiant heat transfer from the periphery.

Even in the case of using the method of Patent Document 2 in which firing jigs and ceramic degreased bodies are energized and heated, the temperature-rise of the ceramic degreased bodies is slow. Thus, the temperature of the ceramic degreased bodies is required to be raised up to a firing temperature in a short period of time.

The present inventors tried to raise the temperature up to a firing temperature by both resistance heating with a heater described in Patent Document 1 and direct energizing heating described in Patent Document 2 in order to increase a temperature-rise rate.
However, when the temperature of the ceramic degreased body was quickly raised by such a method, thermal shock sometimes caused cracks in the ceramic degreased body, and the ceramic degreased body was not favorably fired.

For this reason, a firing method that enables raising of a temperature up to a firing temperature in a short period of time and also enables prevention of cracks in a ceramic degreased body is required to be developed.

### SUMMARY OF THE INVENTION

As a result of further investigations to solve the above problems, the present inventors have found that the case of raising a temperature-rise rate too high in the temperature range up to 2000°C causes cracks in a honeycomb degreased body. The present inventors have also found that it especially takes time to raise the temperature from 2000°C to a firing temperature (for example, 2000 to 2300°C) .

Then, the present inventors have tried to raise the temperature-rise rate not too high in the temperature range up to 2000°C and also tried to shorten the temperature from 2000°C to a firing temperature (for example, 2000 to 2300°C). The present inventors have found that when a ceramic degreased body is preheated up to 2000°C only with resistance heating so as not to raise the temperature-rise rate too high, and heated by both direct energizing heating and resistance heating until the temperature reaches a firing temperature from 2000°C, the temperature-rise time is shortened and no cracks occur in the ceramic degreased body in the firing.

The present inventors also have found that without using a firing jig or a platform member, a lower plate is disposed on the bottom of a ceramic degreased body, an upper plate is disposed on the upper surface, and direct energizing heating is efficiently performed by applying a voltage between the lower plate and the upper plate.
Then, the present inventors have made the present invention based on the above findings.

That is, a method for manufacturing a ceramic fired body according to claim 1 comprises: molding and degreasing a ceramic raw material to manufacture a ceramic degreased body; and firing the ceramic degreased body in a continuous firing furnace, wherein in the continuous firing furnace, a lower plate is disposed on the bottom of the ceramic degreased body, an upper plate is disposed on the upper surface of the ceramic degreased body, a lower energizing electrode is brought into contact with the lower plate, an upper energizing electrode is brought into contact with the upper plate, a resistance heating mechanism is disposed over the upper plate, and an other resistance heating mechanism is disposed under the lower plate, wherein the firing comprises: preheating the ceramic degreased body up to a preheating temperature of 1500 to 2000°C by resistance heating with the resistance heating mechanism; and high-temperature firing, comprising: heating the ceramic degreased body from the preheating temperature to a firing temperature of 2000 to 2300°C by both resistance heating with the resistance heating mechanism and direct energizing heating in which the ceramic degreased body is energized and heated by applying a voltage between the lower plate and the upper plate; and holding the temperature of the ceramic degreased body at the firing temperature.

In the method for manufacturing a ceramic fired body according to claim 1, the ceramic degreased body is preheated up to a preheating temperature of 1500 to 2000°C by resistance heating with the resistance heating mechanism. If preheating is performed only with the resistance heating mechanism, the temperature-rise rate is not too high, and cracks can be prevented in the ceramic degreased body.
In addition, the ceramic degreased body is heated from the preheating temperature to a firing temperature of 2000 to 2300°C by both resistance heating and direct energizing heating. The combination of the two heating methods for heating can shorten the temperature-rise time in this temperature range.
Thus, resistance heating and direct energizing heating are selectively performed depending on the temperature range in the continuous firing furnace, whereby it is possible to shorten temperature-rise time and fire the ceramic degreased body so as not to cause cracks in the ceramic degreased body.

In the method for manufacturing a ceramic fired body according to claim 2, the lower plate is disposed on the bottom of a first ceramic degreased body, a first upper plate is disposed on the upper surface of the first ceramic degreased body, a second ceramic degreased body is disposed on the upper surface of the first upper plate, a second upper plate is disposed on the upper surface of the second ceramic degreased body to manufacture a laminated body having two layers in which ceramic degreased bodies are laminated, and the energizing heating is performed by applying a voltage between the lower plate and the highest upper plate.

In the method for manufacturing a ceramic fired body according to claim 3, the lower plate is disposed on the bottom of a first ceramic degreased body, a first upper plate is disposed on the upper surface of the first ceramic degreased body, a second ceramic degreased body is disposed on the upper surface of the first upper plate, a second upper plate is disposed on the upper surface of the second ceramic degreased body, and then an other ceramic degreased body and an other upper plate are alternately disposed on the second upper plate to manufacture a laminated body having three or more layers in which ceramic degreased bodies are laminated, and the energizing heating is performed by applying a voltage between the lower plate and the highest upper plate.
Thus, plural ceramic degreased bodies can be energized in both up and down directions simultaneously, and a large number of honeycomb fired bodies can be efficiently manufactured.

In the method for manufacturing a ceramic fired body according to claim 4, plural lines of the ceramic degreased bodies are arranged in the continuous firing furnace, and plural lines of the upper and lower energizing electrodes are aligned with plural lines of the ceramic degreased bodies, and direct energizing heating is performed.
Thus, current can be uniformly applied to each of plural lines of ceramic degreased bodies, and plural honeycomb fired bodies can be efficiently manufactured.

In the method for manufacturing a ceramic fired body according to claim 5, the area of the lower plate and the area of the upper plate are each larger than the area of the side face of the ceramic degreased body.
Thus, if direct energizing heating is performed starting from such larger areas, plural lines of ceramic fired bodies can be heated uniformly.

In the method for manufacturing a ceramic fired body according to claim 6, the lower plate and the upper plate comprise carbon.
Since carbon is conductive, a ceramic degreased body can be energized via the lower plate and the upper plate. In addition, since carbon is heat resistant, it is suitable for use in a firing furnace.

In the method for manufacturing a ceramic fired body according to claim 7, a temperature-rise rate in the preheating is 2 to 8°C/min.
Such a temperature-rise rate can suitably prevent cracks in the ceramic fired body in the preheating.

In the method for manufacturing a ceramic fired body according to claim 8, a temperature-rise rate in the high-temperature firing is 6 to 12°C/min.
Such a temperature-rise rate can shorten the temperature-rise time in the high-temperature firing.

In the method for manufacturing a ceramic fired body according to claim 9, the ceramic degreased body is molded to have a large number of cells longitudinally disposed in parallel with one another with a cell wall interposed therebetween, and said ceramic raw material is such that, after firing the ceramic fired body comprises porous silicon carbide.
If porous silicon carbide having such shape is manufactured, variations in pore diameters can be reduced in comparison with the porous silicon carbide fired only by resistance heating.

In the method for manufacturing a ceramic fired body according to claim 10, either one of the ends of each of the large number of cells is alternately plugged.

In a method for manufacturing a honeycomb structured body according to claim 11, plural ceramic fired bodies manufactured by the method for manufacturing a ceramic fired body according to any one of claims 1 to 9 are combined with one another with an adhesive layer interposed therebetween.
Ceramic fired bodies can be manufactured efficiently by such a method. Accordingly, a honeycomb structured body can be manufactured efficiently.

### BRIEF:DESCRIPTION OF THE DRAWINGS

Fig. 1 is a front view schematically illustrating an example of a continuous firing furnace according to one embodiment of the present invention.
Fig. 2 is an A-A line cross-sectional view of a preheating section P of the continuous firing furnace illustrated in Fig. 1.
Fig. 3(a) and Fig. 3(b) are B-B line cross-sectional views of a high-temperature firing section H of the continuous firing furnace illustrated in Fig. 1.
Fig. 4(a), Fig. 4(b), and Fig. 4(c) are perspective views each schematically illustrating an example of the procedure in which a lower plate is disposed on the bottom of a ceramic degreased body, and an upper plate is disposed on the upper surface of the ceramic degreased body, according to one embodiment of the present invention.
Fig. 5 is a perspective view schematically illustrating an example of a honeycomb structured body manufactured in the first embodiment of the present invention.
Fig.. 6 (a) is a perspective view schematically illustrating an example of a honeycomb fired body according to one embodiment of the present invention, and Fig. 6(b) is a C-C line cross-sectional view of Fig. 6(a).
Fig. 7 is a perspective view schematically illustrating an example of a part in the high-temperature firing section of the continuous firing furnace used in the second embodiment of the present invention.
Fig. 8 is a perspective view schematically illustrating an example of a laminated body having three layers in which ceramic degreased bodies are laminated, and energizing electrodes, according to one embodiment of the present invention.

### DETAILED DESCRIPTION OF EXEMPLARY EMBODIMENTS

### (First embodiment)

Hereinafter, the first embodiment, which is one embodiment of the method for manufacturing a ceramic fired body of the present invention and the method for manufacturing a honeycomb structured body, will be described with reference to the drawings.
First, a continuous firing furnace used in the firing of the present embodiment will be described.

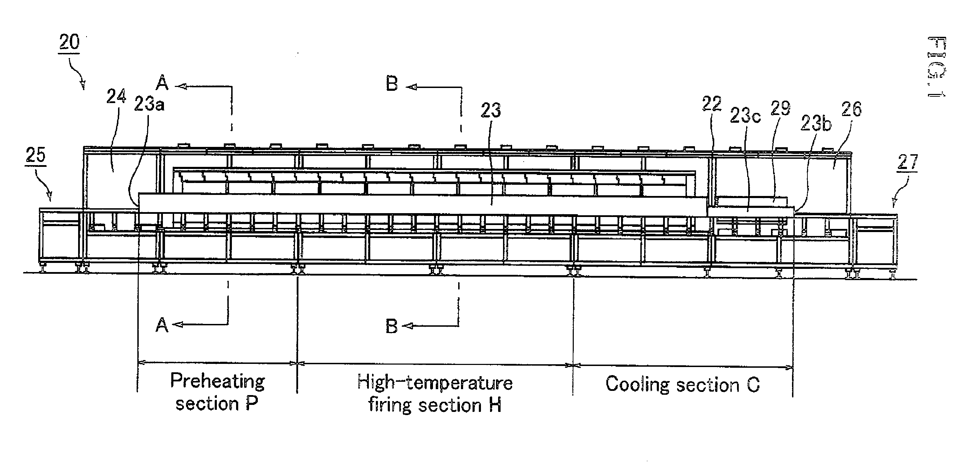

Fig. 1 is a front view schematically illustrating an example of a continuous firing furnace according to one embodiment of the present invention.

In the oblong body frame 22 of the continuous firing furnace 20 illustrated in Fig. 1, a tubular muffle 23 made of a heat-resistant material is transversely supported in most parts except an input part 25 and an exit part 27, and an inlet purge chamber 24 is formed in the vicinity of the inlet part 23a of the muffle 23. An input part 25 is provided forward of an inlet purge chamber 24, that is, on the left side in Fig. 1. A cooling jacket 29, a cooling means, is provided in a rear end 23c of the muffle 23. An exit purge chamber 26 is provided in the vicinity of an exit part 23b of the muffle 23. An exit part 27 is provided backward of the exit purge chamber 26, that is, on the right side in Fig. 1.

A transport mechanism configured to transport a firing object is disposed in the muffle 23. A transport mechanism is driven, whereby the firing object is moved from the inlet part 23a to the exit part 23b, that is, from the left side to the right side in Fig. 1.

The region where the muffle 23 is disposed in the continuous firing furnace 20 is divided into a preheating section P, a high-temperature firing section H, and a cooling section C in this order from the left in Fig. 1.
The preheating section P is a section to preheat the temperature up to a preheating temperature of 1500 to 2000°C by resistance heating with a resistance heating mechanism.
The high-temperature firing section H is a section to perform high-temperature firing that comprises: heating the ceramic degreased body from the preheating temperature to a firing temperature of 2000 to 2300°C by both resistance heating with the resistance heating mechanism and direct energizing heating; and holding the temperature of the ceramic degreased body at the firing temperature.
The cooling section C is a section to cool the ceramic degreased body after the high-temperature firing down to room temperature.
Hereinafter, the preheating section P, the high-temperature firing section H, and the cooling section C of the continuous firing furnace 20 will be described.

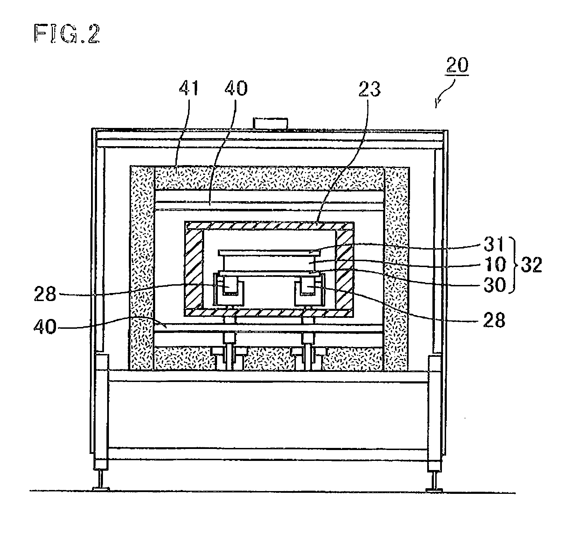

Fig. 2 is an A-A line cross-sectional view of a preheating section P of the continuous firing furnace illustrated in Fig. 1.
The preheating section P illustrated in Fig. 2 has a muffle 23 provided in the center of the cross section thereof. Two lines of rollers 28 that serve as a transport mechanism are provided at the bottom of the muffle 23.
A lower plate 30 is placed on the rollers 28, a ceramic degreased body 10 as a firing object is placed on the lower plate 30, and an upper plate 31 is placed on the ceramic degreased body 10.
The plural rollers 28 are provided in a longitudinal direction of the continuous firing furnace (transverse direction illustrated in Fig. 1). The rollers 28 are driven, whereby the lower plate 30, the ceramic degreased body 10, and the upper plate 31 are collectively transported into the muffle 23. Hereinafter, the lower plate 30, the ceramic degreased body 10, and the upper plate 31 are collectively referred to as a transport object (transport object 32).

The material of the lower plate 30 and the upper plate 31 is not particularly limited, and is desirably carbon. It is because carbon is conductive and heat resistant.

A resistance heating mechanism 40 is provided over the muffle 23, and an other resistance heating mechanism 40 is provided under the muffle 23. As a resistance heating mechanism, a graphite heater or the like can be suitably used.
The resistance heating mechanisms 40 are energized and thereby heated. The muffle 23 is heated with the heat, whereby the ceramic degreased body 10 that is a firing object in the muffle 23 is heated.
A heat insulating layer 41 is provided outside the resistance heating mechanism 40.

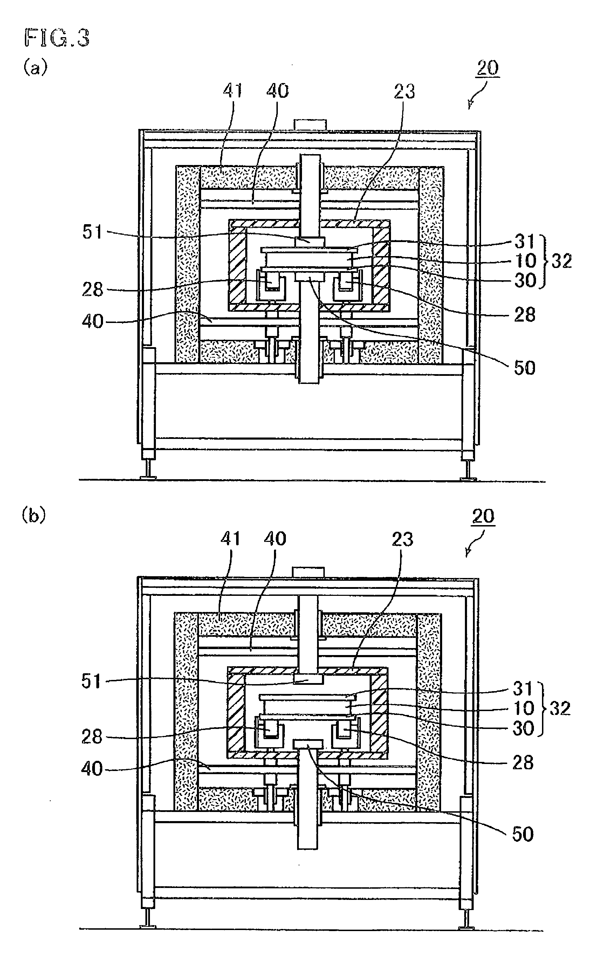

Fig. 3(a) is a B-B line cross-sectional view of a high-temperature firing section H of the continuous firing furnace illustrated in Fig. 1. In Fig. 3(a), a lower energizing electrode is brought into contact with the lower plate, and an upper energizing electrode is brought into contact with the upper plate.
Fig. 3(b) illustrates a state in which the upper and lower energizing electrodes have been moved in Fig. 3(a) so as to be separate from the upper plate and the lower plate, respectively.
The high-temperature firing section H illustrated in Fig. 3(a) and Fig. 3(b) has energizing electrodes provided therein in addition to the configuration of the preheating section P.
The energizing electrodes are composed of a lower electrode 50 disposed under a lower plate 30 and an upper electrode 51 disposed on the upper plate 31. The lower electrode 50 and the upper electrode 51 pass through a muffle 23.
The lower electrode 50 is disposed between the rollers 28 so as not to contact the rollers 28.

The lower electrode 50 and the upper electrode 51 can be moved up and down.
As illustrated in Fig. 3(a), in high-temperature firing, the lower electrode 50 is moved up to contact the lower plate 30, and the upper electrode 51 is moved down to contact the upper plate 31. The ceramic degreased body 10 is energized between the lower plate 30 and the upper plate 31 by applying a voltage between the lower electrode 50 and the upper electrode 51. Thereby, direct energizing heating of the ceramic degreased body 10 is performed.
When direct energizing heating is not performed, as illustrated in Fig. 3(b), the lower electrode 50 is moved down so as to be separate from the lower plate 30, and the upper electrode 51 are moved up so as to be separate from the upper plate 31.

In the high-temperature firing section H, the resistance heating mechanism 40 is provided over the muffle 23, and an other resistance heating mechanism is provided under the muffle 23, as in the preheating section P. The temperature of the ceramic degreased body 10 can be raised up to a firing temperature by both direct energizing heating and resistance heating and held at the firing temperature.

The cross-sectional view of the cooling section C is not illustrated. The cooling section C has substantially the same configuration as that of the preheating section P illustrated in Fig. 2, except that a resistance heating mechanism, and a heating mechanism of both an upper electrode and a lower electrode are not provided.
Since the heating mechanism is not provided, the temperature of the firing object that passes through the cooling section C gradually decreases.
The temperature and length of the cooling section C, and the transport rate in the cooling section C are adjusted so that the firing object reaches approximately room temperature (for example, 25°C) in the vicinity of the exit part of the muffle.
A cooling mechanism such as a blower, which promotes cooling of a firing object by blowing air to the firing object, may be provided in the cooling section C.

Next, the method for manufacturing a ceramic fired body according to the present embodiment by using such a continuous firing furnace will be described.
First, a ceramic degreased body that is a firing object is manufactured.
The ceramic degreased body is manufactured by, for example, molding a wet mixture that contains a ceramic powder made of porous silicon carbide and a binder to from a ceramic molded body, drying the molded body, degreasing the molded body at a predetermined temperature, and heating and removing an organic matter in the molded body.
In the present embodiment, the subsequent processes will be described, for example, by the method for manufacturing a rectangular-pillar shaped ceramic fired body comprising porous silicon carbide having a large number of cells longitudinally disposed in parallel with one another with a cell wall interposed therebetween.
An example of the shape of the ceramic fired body will be described later by the method for manufacturing a honeycomb structured body.

Next, such a ceramic degreased body is charged into the continuous firing furnace illustrated in Fig. 1 and fired. Before charging the ceramic degreased body into the continuous firing furnace, a lower plate is disposed on the bottom of the ceramic degreased body, and an upper plate is disposed on the upper surface of the ceramic degreased body.

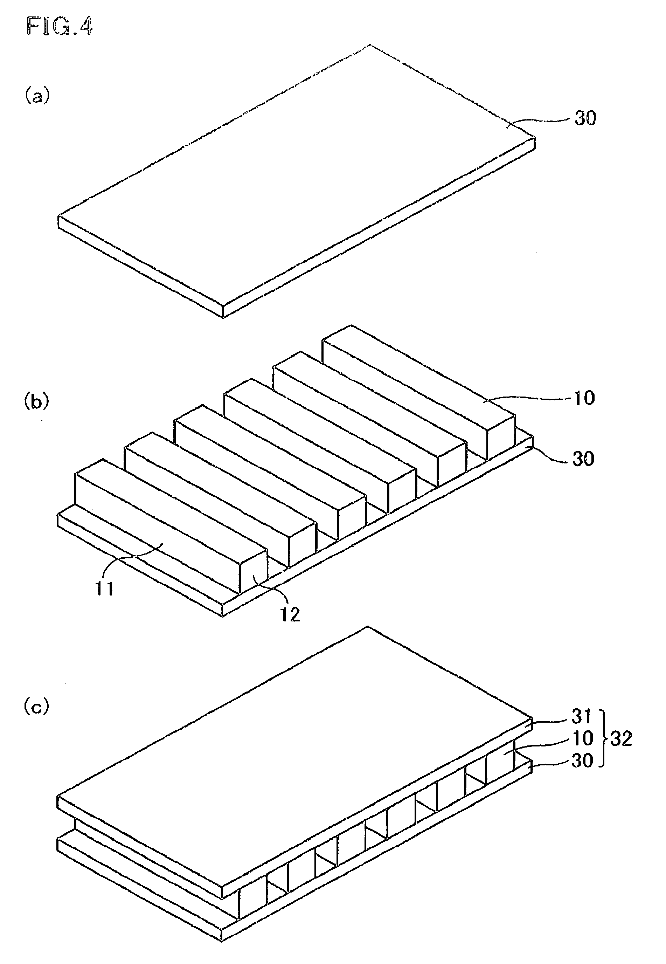

Fig. 4(a), Fig. 4(b), and Fig. 4(c) are perspective views each schematically illustrating an example of the procedure in which a lower plate is disposed on the bottom of a ceramic degreased body, and an upper plate is disposed on the upper surface of the ceramic degreased body, according to one embodiment of the present invention.
First, as illustrated in Fig. 4(a), a lower plate 30 made of carbon is prepared.
Then, as illustrated in Fig. 4(b), rectangular-pillar shaped ceramic degreased bodies 10 are disposed in parallel with one another on the lower plate 30. The number of the ceramic degreased bodies 10 disposed in parallel with one another is not particularly limited, and may be one or more.
Subsequently, as illustrated in Fig. 4(c), an upper plate 31 made of carbon is disposed on the upper surface of the ceramic degreased bodies 10.
Thus, the lower plate 30, the ceramic degreased bodies 10, and the upper plate 31 are disposed to form a transport object 32.
It is to be noted that the positions of the lower plate 30 and the upper plate 31 are different, but these are made of the same carbon plates.

In the present embodiment, the area of the lower plate and the area of the upper plate are each larger than the area of the side face of the ceramic degreased body. The area of the side face of the ceramic degreased body means the area of the surface indicated by the numeral 11 in Fig. 4(b) or the surface indicated by the numeral 12, that is, the area of the surface that does not contact the upper plate or the lower plate.
The area of the lower plate and the area of the upper plate mean the area of the main surface (largest surface) of the lower plate and that of the upper plate.

The assembled transport object 32 is disposed in the input part 25 of the continuous firing furnace 20 illustrated in Fig. 1, and the rollers 28 (see Fig. 2) of the continuous firing furnace 20 are driven and moved to an inlet purge chamber 24. In the inlet purge chamber 24, the furnace atmosphere is adjusted from an air atmosphere to an inert gas atmosphere such as argon and nitrogen, if necessary. Then, the transport object 32 is moved to the inlet part 23a of the muffle 23.

The transport object 32 is transported to the preheating section P in the muffle 23 of the continuous firing furnace 20.
In the preheating section P, the ceramic degreased body is preheated from room temperature (for example, 25°C) to a preheating temperature of 1500 to 2000°C by resistance heating with a resistance heating mechanism.
In the present embodiment, a temperature-rise rate in the preheating is 2 to 8°C/min, and the temperature-rise rate is not particularly limited.
The gas atmosphere in the preheating section in the present embodiment is an argon atmosphere, and it is sufficient that the gas atmosphere is optionally adjusted depending on the kind and shape of the honeycomb degreased body.

The preheated transport object 32 is transported to the high-temperature firing section H in the muffle 23.
In the high-temperature firing section H, the ceramic degreased body is heated from the preheating temperature to a firing temperature of 2000 to 2300°C by both resistance heating with the resistance heating mechanism and direct energizing heating in which the ceramic degreased body is energized and heated by applying a voltage between the lower plate and the upper plate.
In the present embodiment, a temperature-rise rate from the preheating temperature to the firing temperature is 6 to 12°C/min, and the temperature-rise rate is not particularly limited.

Hereinafter, direct energizing heating will be described in detail with reference to Fig. 3(a) and Fig. 3(b).
Before the transport object 32 is transported to the high-temperature firing section H, the lower electrode 50 is disposed on the lower side and the upper electrode 51 is disposed on the upper side, as illustrated in Fig. 3(b).
Then, when the transport object 32 is transported to a predetermined position in the high-temperature firing section H, that is, the position sandwiched by the lower electrode 50 and the upper electrode 51, the rollers 28 that serve as a transport mechanism are stopped.
Next, as illustrated in Fig. 3(a), the lower electrode 50 is moved up to contact the lower plate 30, and the upper electrode 51 is moved down to contact the upper plate 31.
Subsequently, the ceramic degreased body 10 is energized between the lower plate 30 and the upper plate 31 by applying a voltage between the lower electrode 50 and the upper electrode 51. Thereby, direct energizing heating of the ceramic degreased body 10 is performed.

In the case of performing direct energizing heating, force is desirably applied from the upper electrode to the upper plate and also from the lower electrode to the lower plate in order to secure contact between the electrodes and the upper plate and the lower plate.
It is necessary to adjust the force to be applied depending on the strength of the upper plate and the lower plate, etc. For example, in the case where the upper plate and the lower plate have a thickness of 16 mm and are made of carbon, the force is desirably 400 to 800 kgf.

The applied voltage in direct energizing heating is optionally adjusted depending on the temperature-rise rate and the material of the ceramic degreased body.
For example, the voltage is desirably 3 to 100 V, and the current is desirably 50 to 5000 A.

In the high-temperature firing section, direct energizing heating and resistance heating with the resistance heating mechanism are performed together. The ratio of the amount of heat applied by direct energizing heating to the amount of heat applied by resistance heating is not particularly limited, and it is sufficient that the ratio is adjusted so as to reach a predetermined temperature-rise rate. If the ratio of the amount of heat applied by direct energizing heating is relatively increased, the electrical energy used upon applying the same amount of heat to a ceramic degreased body can be decreased.

In the high-temperature firing section, the ceramic degreased body is heated up to a firing temperature of 2000 to 2300°C. Thereafter, the ceramic degreased body is held at the firing temperature.
Also upon holding the ceramic degreased body at the firing temperature, direct energizing heating and resistance heating with the resistance heating mechanism are performed together. Also in this case, the amount of heat applied by direct energizing heating and resistance heating is appropriately adjusted, so that the temperature of the ceramic degreased body is held at a predetermined firing temperature.
The gas atmosphere in the high-temperature firing section in the present embodiment is an argon atmosphere, and it is sufficient that the gas atmosphere is optionally adjusted depending on the kind and shape of the honeycomb degreased body.

The high-temperature firing performed in the high-temperature firing section means the process comprising raising the temperature from a preheating temperature to a firing temperature and holding the temperature at the firing temperature. Through this high-temperature firing, a ceramic degreased body is fired and changed into a ceramic fired body. In the high-temperature firing, the transport mechanism is stopped, the lower electrode is brought and kept in contact with the lower plate, and the upper electrode is brought and kept in contact with the upper plate. Thereby, it is possible to sequentially raise the temperature up to a firing temperature and holding the temperature at the firing temperature.

After the high-temperature firing, the transport mechanism is driven, and the ceramic fired body fired through the high-temperature firing is transported into a cooling section C in the muffle 23 (see Fig. 1).
In the cooling section C, the temperature of the ceramic fired body is gradually decreased. When the temperature of the ceramic fired body reaches approximately room temperature (for example, 25°C), the transport object 32 is removed from the exit part 23b (see Fig. 1) of the muffle 23 and moved to a exit purge chamber 26 (see Fig. 1).
In the exit purge chamber 26, the furnace atmosphere is adjusted from an inert gas atmosphere such as argon and nitrogen to an air atmosphere, if necessary.
Then, the transport object 32 is removed from the exit part 27 of the continuous firing furnace 20, and the firing is completed.

Next, the method for manufacturing a honeycomb structured body of the present embodiment will be described.
In the present embodiment, the ceramic degreased body that is a firing object is a honeycomb degreased body having a honeycomb shape, and the honeycomb degreased body is fired to manufacture a honeycomb fired body. Then, plural honeycomb fired bodies are combined with one another to manufacture a honeycomb structured body.
First, the honeycomb structured body and the honeycomb fired body manufactured in the present embodiment will be described.

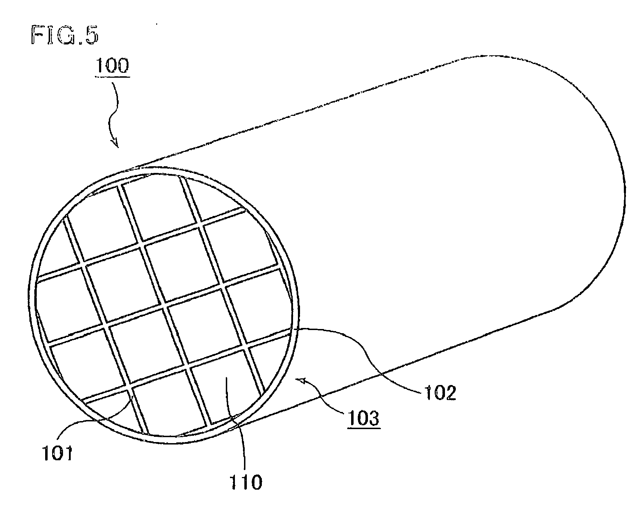

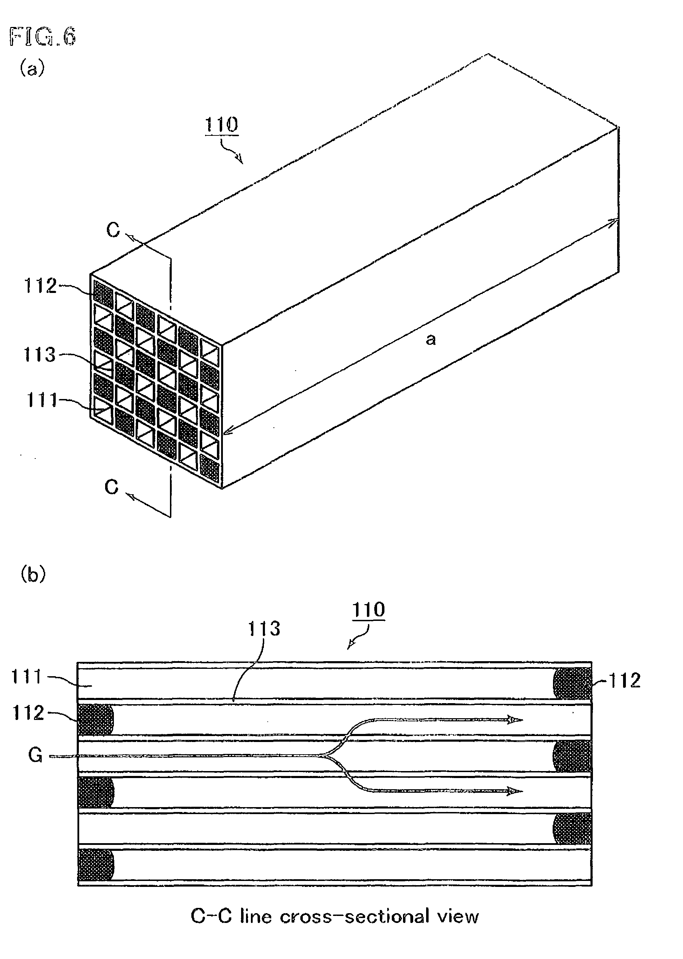

Fig. 5 is a perspective view schematically illustrating an example of a honeycomb structured body manufactured in the first embodiment of the present invention, Fig. 6 (a) is a perspective view schematically illustrating an example of a honeycomb fired body according to one embodiment of the present invention, and Fig. 6(b) is a C-C line cross-sectional view of Fig. 6(a).

In the honeycomb structured body 100 illustrated in Fig. 5, plural honeycomb fired bodies 110 made of porous silicon carbide and illustrated in Fig. 6(a) and Fig. 6(b) are combined with one another by interposing a sealing material layer (adhesive layer) 101 to form a ceramic block 103, and a sealing material layer (coat layer) 102 is formed on the outer periphery of this ceramic block 103.

In the honeycomb fired body 110 illustrated in Fig. 6(a) and Fig. 6(b), a large number of cells 111 are longitudinally (in the direction of a in Fig. 6(a)) disposed in parallel with one another with a cell wall 113 interposed therebetween, and either one of the ends of the cells is plugged with a plug material 112. In other words, exhaust gases G that have entered cells 111 whose one of the end faces is open are allowed to flow out of the other cells whose other end face is open after always passing through the cell wall 113 that separates the cells 111.
Therefore, the cell wall 113 functions as a filter for capturing PMs and the like.

Hereinafter, the method for manufacturing a honeycomb structured body according to the present embodiment will be described.
In the first place, silicon carbide powders having different average particle diameters as a ceramic raw material, and an organic binder are mixed to prepare a mixed powder. Then, a liquid plasticizer, a lubricant, and water are mixed to prepare a wet mixture for manufacturing a molded body.

Subsequently, molding is performed by charging the wet mixture into an extrusion-molding apparatus and extrusion-molding the mixture to manufacture a honeycomb molded body having a predetermined shape.

Next, the two ends of the honeycomb molded body are cut with a cutting machine so that the honeycomb molded body is cut into a predetermined length. Then, the cut honeycomb molded body is dried with a drying apparatus.
Subsequently, a predetermined amount of a plug material paste to be a plug is charged into an end of either one of cells to seal the cells. A honeycomb molded body with plugged cells is manufactured through such processes.

Next, degreasing is performed by heating organic matters of the honeycomb molded body with the plugged cells in a degreasing furnace to manufacture a honeycomb degreased body. The shape of the honeycomb degreased body is substantially the same as the shape of the honeycomb fired body illustrated in Fig. 6(a) and Fig. 6(b).

Subsequently, the honeycomb degreased body is transported into a firing furnace, and then fired in the firing of the method for manufacturing a ceramic fired body according to the present embodiment to manufacture a honeycomb fired body having a shape illustrated in Fig. 6(a) and Fig. 6(b).

Subsequently, bonding is performed by forming an adhesive paste layer between the honeycomb fired bodies, heating and solidifying the adhesive paste layer to form a adhesive layer, and bonding plural honeycomb fired bodies by interposing an adhesive layer to form a ceramic block.

Then, peripheral cutting is performed by cutting the outer periphery of the ceramic block with a diamond cutter to form a ceramic block having a substantially round pillar shape.
Further, formation of the sealing material layer is performed by applying a sealing material paste to the peripheral surface of the ceramic block having a substantially round pillar shape, and drying and solidifying the sealing material paste to form a sealing material layer.
It is to be noted that the same paste as the sealing material paste used for formation of the sealing material paste layer can be used as the adhesive paste.
The honeycomb structured body is manufactured by the above processes.

Hereinafter, the effects of the method for manufacturing a ceramic fired body and the method for manufacturing a honeycomb structured body according to the present embodiment will be described.
(1) In the method for manufacturing a ceramic fired body of the present embodiment, the ceramic degreased body is preheated up to a preheating temperature of 1500 to 2000°C by resistance heating with the resistance heating mechanism. As preheating is performed only with a resistance heating mechanism, the temperature-rise rate is not too high, and cracks can be prevented in the ceramic degreased body.

(2) In the method for manufacturing a ceramic fired body of the present embodiment, the ceramic degreased body is heated from the preheating temperature to a firing temperature of 2000 to 2300°C by both resistance heating and direct energizing heating. The combination of the two heating methods for heating can shorten the temperature-rise time in this temperature range.

(3) In the method for manufacturing a ceramic fired body of the present embodiment, the area of the lower plate and the area of the upper plate are each larger than the area of the side face of the ceramic degreased body.
As direct energizing heating is performed starting from such larger areas, plural lines of ceramic fired bodies can be heated uniformly.

(4) In the method for manufacturing a ceramic fired body of the present embodiment, the lower plate and the upper plate are made of carbon.
Since carbon is conductive, the ceramic degreased body can be suitably energized through the lower plate and the upper plate. Since carbon is also heat resistant, it is suitably used in a firing furnace.

(5) In the method for manufacturing a ceramic fired body of the present embodiment, a temperature-rise rate in the preheating is 2 to 8°C/min. The temperature-rise rate can suitably prevent cracks in the ceramic fired body in the preheating.

(6) In the method for manufacturing a ceramic fired body of the present embodiment, a temperature-rise rate in the high-temperature firing is 6 to 12°C/min.
The temperature-rise rate can shorten the temperature-rise time in the high-temperature-firing.

(7) In the method for manufacturing a ceramic fired body of the present embodiment, the ceramic fired body comprises porous silicon carbide having a large number of cells longitudinally disposed in parallel with one another with a cell wall interposed therebetween. In the case where the porous silicon carbide of such a shape is manufactured, variations in pore diameters can be reduced compared with the porous silicon carbide fired only with resistance heating.

(8) In the method for manufacturing a honeycomb structured body of the present embodiment, plural ceramic fired bodies manufactured by the method for manufacturing a ceramic fired body according to the present embodiment are combined with one another with an adhesive layer interposed therebetween.
Ceramic fired bodies can be manufactured efficiently by such a method. Accordingly, a honeycomb structured body can be manufactured efficiently.

### EXAMPLES

The following description will discuss examples that more specifically disclose the first embodiment of the present invention, and the present invention is not intended to be limited only by these examples.
In the following examples and comparative examples, honeycomb fired bodies of the shape as illustrated in Fig. 6(a) and Fig. 6(b) are manufactured as ceramic fired bodies, and evaluated for the manufacturing time and quality.

### (Example 1)

### (Manufacturing of honeycomb degreased body)

An amount of 52.8% by weight of coarse powder of silicon carbide having an average particle diameter of 22 µm and 22.6% by weight of fine powder of silicon carbide having an average particle diameter of 0.5 µm were mixed. To the resulting mixture, 2.1% by weight of acrylic resin, 4.6% by weight of an organic binder (methylcellulose), 2.8% by weight of a lubricant (UNILUB, made by NOF Corporation), 1.3% by weight of glycerin, and 13.8% by weight of water were added, and then kneaded to prepare a mixture composition. The mixture composition was extrusion-molded and cut into a predetermined length, so that a raw honeycomb molded body having substantially the same shape as the shape illustrated in Fig. 6(a) and having cells not plugged was manufactured.

Next, the raw honeycomb molded body was dried with a microwave drying apparatus to give a dried body of the honeycomb molded body comprising a silicon carbide, with a size of 34.3 mm x 34.3 mm x 150 mm, the number of cells (cell density) of 46.5 pcs/cm², and a thickness of the cell wall of 0.25 mm (10 mil). A paste (mixture composition) having the same composition as the raw molded body was then charged into predetermined cells, and the honeycomb molded body was again dried with a drying apparatus.
The dried honeycomb molded body was degreased at 400°C to manufacture a honeycomb degreased body having substantially the same shape as illustrated in Fig. 6(a).

### (Firing)

The manufactured honeycomb degreased body was fired with a continuous firing furnace as illustrated in Fig. 1, Fig. 2, and Fig. 3 by the following procedure.
First, by following the procedure illustrated in Fig. 4(a), Fig. 4(b), and Fig. 4(c), a honeycomb degreased body is disposed on the lower plate, and the upper plate is disposed on the honeycomb degreased bodies to form a transport object.
The transport object has a structure in which six honeycomb degreased bodies are disposed on the lower plate, and the upper plate is disposed on the honeycomb degreased bodies.
As the lower plate and the upper plate, a carbon plate having a thickness of 16 mm and a size of the main surface of 300 mm x 300 mm was used.

Then, the transport object was placed on rollers of the continuous firing furnace, the rollers were driven, and then transport objects were sequentially transported into a muffle. Argon gas was flowed in the muffle, which was then filled with argon atmosphere.
In the first place, the transport object was transported to a preheating section in the muffle. Then, preheating was performed as follows. First, resistance heating is performed with a resistance heating mechanism (carbon heater) while the transport object is transported, and thereafter the honeycomb degreased body was heated until the temperature thereof reached 2000°C. It took 325 minutes to start heating and raise the temperature of the honeycomb degreased body up to 2000°C.

Subsequently, the transport object was transported to a high-temperature firing section in the muffle. Then, a lower energizing electrode was brought into contact with the lower plate of the transport object, and an upper energizing electrode was brought into contact with the upper plate thereof. Thereafter, the honeycomb degreased body between the lower plate and the upper plate was energized by applying a voltage between the lower electrode and the upper electrode. Thereby, direct energizing heating of the honeycomb degreased body was performed.

In addition, resistance heating was performed with two resistance heating mechanisms (carbon heaters), one of which is provided over the muffle, and the other of which is provided under the muffle. The combination of direct energizing heating and resistance heating raised the temperature from the preheating temperature of the honeycomb degreased body of 2000°C to the firing temperature of 2200°C. It took 30 minutes to raise the temperature from 2000 to 2200°C.
That is, it took 355 minutes to start heating and raise the temperature of the honeycomb degreased body up to 2200°C.

Thereafter, direct energizing heating and resistance heating with a resistance heating mechanism are performed together, the firing temperature of the honeycomb degreased body was held at 2200°C for 60 minutes, and thereby the high-temperature firing was completed.
Through the high-temperature firing, the honeycomb degreased body was fired into a honeycomb fired body.

Subsequently, the transport object is transported into a cooling section in the muffle. The temperature of the honeycomb fired body was gradually decreased in the cooling section. The transport object was removed from the muffle when the temperature of the ceramic fired body reached approximately room temperature.
Then, the furnace was filled with air atmosphere in an exit purge chamber, the transport object was removed from the exit part of the continuous firing furnace, and the firing was completed.
Through the above processes, a honeycomb fired body made of a silicon carbide sintered body, with a porosity of 45%, an average pore diameter of 15 µm, a size of 34.3 mm x 34.3 mm x 150 mm, the number of cells (cell density) of 46.5 pcs/cm² and a thickness of the cell wall of 0.25 mm (10 mil) was manufactured.

### (Comparative Example 1)

The temperature was raised to the preheating temperature of the honeycomb degreased body of 2000° in the same manner as in Example 1 in the preheating. However, in the high-temperature firing, direct energizing heating was not performed, and only resistance heating with a resistance heating mechanism was performed from the preheating temperature of 2000°C to the firing temperature of 2200°C. It took 50 minutes to raise the temperature from 2000 to 2200°C.
That is, it took 375 minutes to start heating and raise the temperature of the honeycomb degreased body up to 2200°C.

### (Comparative Example 2)

The honeycomb fired body was manufactured in the same manner as in Example 1 in the preheating. However, in the high-temperature firing, direct energizing heating was performed, and resistance heating with a resistance heating mechanism was not performed. It took 60 minutes to raise the temperature from 2000 to 2200°C.
That is, it took 385 minutes to heat the honeycomb degreased body up to 2200°C.

### (Comparative Example 3)

A honeycomb fired body was manufactured by both resistance heating and direct energizing heating in both the preheating and the high-temperature firing, by using the same continuous firing furnace as the firing furnace in Example 1 which was provided with the same energizing heating mechanism in the preheating section as in the high-temperature firing section.
It took 120 minutes to raise the temperature to the preheating temperature of 2000°C, and it took 30 minutes to raise the temperature from 2000 to 2200°C.
That is, it took 150 minutes to start heating and raise the temperature of the honeycomb degreased body up to 2200°C.
In Comparative Example 3, two out of six manufactured honeycomb fired bodies had cracks.

### (Evaluation of a honeycomb fired body)

The honeycomb fired bodies (six pieces each) manufactured in Example 1 and Comparative Example 1 were evaluated for the average pore diameter, pressure loss, and bending strength by the following procedure.

### (Evaluation of average pore diameter)

Part of the cell walls of the honeycomb fired body were cut, and the pore distribution of the cell walls was measured in a range of pore diameters from 0.1 to 360 µm with a porosimeter (AutoPore III 9420, manufactured by Shimadzu Corporation) by a mercury porosimetry. The average pore diameter and the variations thereof (σ) were calculated from the results.

### (Measurement of pressure loss)

In the exhaust gas pipe with the blower, a honeycomb fired body was fixed and disposed in a metal casing. Thereby, a pressure loss measuring apparatus to which a pressure gauge was attached so as to enable detection of pressure before and after the honeycomb fired body was manufactured.
The blower was driven so that the flow rate of exhaust gases was set to 750 m³/h, and a pressure difference (pressure loss) was measured after five minutes from the start of the driving operation. Plural honeycomb fired bodies were measured for pressure loss, and the average and variations thereof (σ) were calculated.

### (Measurement of bending strength)

The three-point bending test was carried out on each of the honeycomb fired bodies in conformity with JIS R1601, and the bending strength (load) of the honeycomb fired bodies was measured.
Upon measurement of bending strength, the three-point bending test was conducted with an Instron tester, and the load (MPa) at break was measured. The distance between fulcrums was 135 mm.
The bending strength of plural honeycomb fired bodies was measured, and the average and variations thereof (σ) were calculated.

Table 1 summarizes the heating method and the temperature-rise time in firing of each example and comparative example, and measurement results of the average pore diameter, pressure loss, and bending strength of each of the honeycomb fired bodies manufactured in Example 1 and Comparative Example 1.

**[Table 1]**

| | Heating method | | Temperature-rise time (min) | | Average pore diameter (µm) | | Pressure loss (kPa) | | Bending strength (MPa) | |
|---|---|---|---|---|---|---|---|---|---|---|
| | Preheating | High-temperature firing | to 2000°C | to 2200°C | Average | Variations (σ) | Average | Variations (σ) | Average | variations (σ) |
| Example 1 | Resistance heating | Resistance heating + direct energizing heating | 325 | 30 | 11.6 | 0.14 | 0.98 | 0.00 | 54.71 | 2.78 |
| Comparative Example 1 | Resistance heating | Resistance heating | 325 | 50 | 11.6 | 0.21 | 0.97 | 0.01 | 54.68 | 2.99 |
| Comparative Example 2 | Resistance heating | Direct energizing heating | 325 | 60 | NA | NA | NA | NA | NA | NA |
| Comparative Example 3 | Resistance heating + direct energizing heating | Resistance heating + direct energizing heating | 120 | 30 | Cracks occurred in honeycomb fired body | | | | | |

| | | | | | | | | | | |
|---|---|---|---|---|---|---|---|---|---|---|
| NA = Not Available | | | | | | | | | | |

Since resistance heating and direct energizing heating are performed together in the high-temperature firing in Example 1, the temperature-rise time from 2000 to 2200°C is 30 minutes, and 20 minutes shorter than that in Comparative Example 1 in which only resistance heating is performed in the high-temperature firing.
When the properties of the honeycomb fired bodies manufactured in Example 1 and Comparative Example 1 were compared, averages of average pore diameters, pressure loss, and bending strength thereof were equivalent, but variations in each of the measurement values were smaller in Example 1.
This showed that in the method for manufacturing a ceramic fired body of Example 1, the variations in the average pore diameter, pressure loss, and bending strength were small, and ceramic fired bodies were manufactured in a short period of time.

In Comparative Example 2, only direct energizing heating is performed in the high-temperature firing, and the temperature-rise time from 2000 to 2200°C was as long as 60 minutes.
In Comparative Example 3, the temperature-rise time from the start of heating to 2200°C was as short as 150 minutes. However, the temperature-rise rate in the preheating was so high that cracks occurred in the honeycomb fired bodies.

### (Second embodiment)

Hereinafter, the second embodiment, which is one embodiment of the present invention, will be described.
In the present embodiment, in the method for manufacturing a ceramic fired body and the method for manufacturing a honeycomb structured body according to the first embodiment, plural lines of the ceramic degreased bodies are arranged in the continuous firing furnace, plural lines of the upper and lower energizing electrodes are aligned with plural lines of the ceramic degreased bodies, and direct energizing heating was performed.

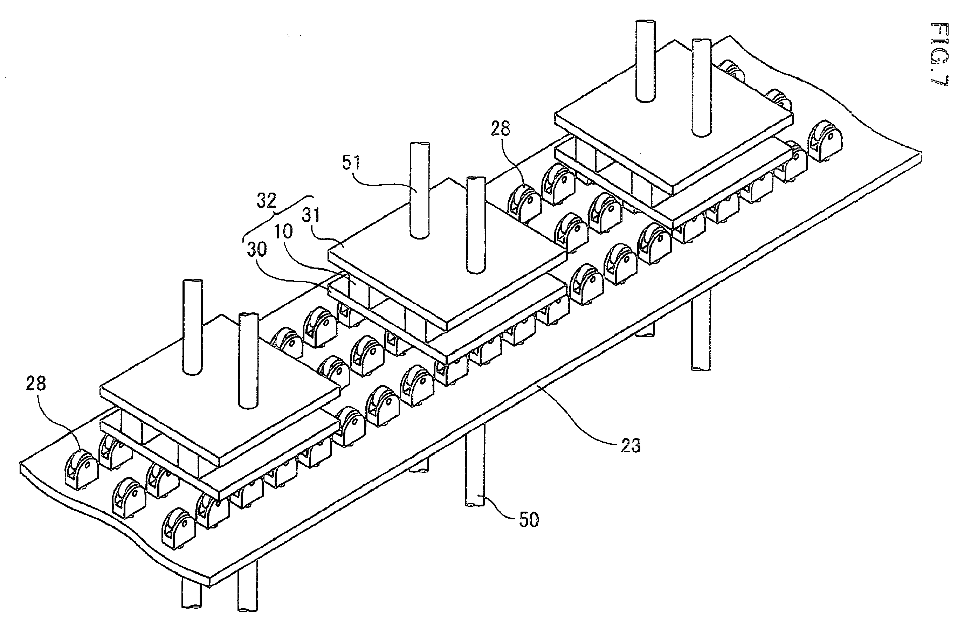

Fig. 7 is a perspective view schematically illustrating an example of a part in the high-temperature firing section of the continuous firing furnace used in the second embodiment of the present invention.
In Fig. 7, two ceramic degreased bodies 10 are disposed between one set of a lower plate 30 and an upper plate 31.
Two sets of lower electrodes 50 are disposed on the bottom of one set of the lower plate 30, and two sets of upper electrodes 51 are disposed on the upper surface of one set of the upper plate 31, so as to correspond to each of the two ceramic degreased bodies 10.
In addition, three lines of rollers 28 are provided so as not to contact the lower electrodes 50.

In the continuous firing furnace, plural transport objects 32 comprising one set of a lower plate 30, an upper plate 31, and two ceramic degreased bodies 10 are disposed, and a lower electrode 50 and an upper electrode 51 are disposed on the upper surface and bottom of each of the transport objects 32. When the transport objects and the energizing electrodes are thus disposed, direct energizing heating of a large number of ceramic degreased bodies can be performed at once.

In the present embodiment, the effects of (1) to (8) described also in the first embodiment can be exerted, so can the following effects.
(9) In the method for manufacturing the ceramic fired body of the present embodiment, plural lines of the ceramic degreased bodies are arranged in the continuous firing furnace, and plural lines of the upper and lower energizing electrodes are aligned with plural lines of the ceramic degreased bodies, and direct energizing heating is performed.
Thus, current can be equally applied to each of plural lines of the ceramic degreased bodies, and a large number of honeycomb fired bodies can be efficiently manufactured.

### (Third embodiment)

Hereinafter, the third embodiment, which is one embodiment of the present invention, will be described.
In the present embodiment, ceramic degreased bodies and carbon plates are alternately disposed to manufacture a laminated body in which ceramic degreased bodies and carbon plates are laminated in multiple layers. Direct energizing heating is performed by applying a voltage between the lowest carbon plate and the highest carbon plate.

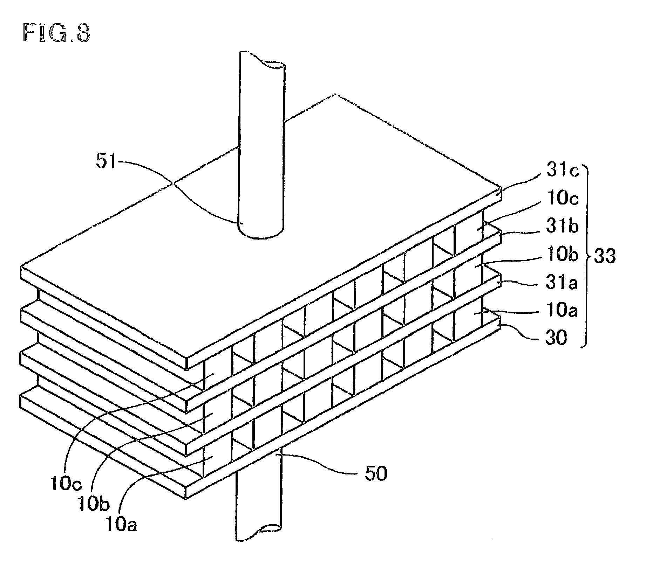

Fig. 8 is a perspective view schematically illustrating an example of a laminated having three layers in which ceramic degreased bodies are laminated, and energizing electrodes, according to one embodiment of the present invention. Members other than the laminated body and the energizing electrodes are not illustrated in Fig. 8.
In Fig. 8, a first layer of ceramic degreased bodies 10a is disposed on the lower plate 30, and a first upper plate 31a is disposed on the first layer of ceramic degreased bodies 10a.
A second layer of ceramic degreased bodies 10b, a second upper plate 31b, a third layer of ceramic degreased bodies 10c, and a third upper plate 31c are disposed in this order on the first upper plate 31a to form a laminated body 33.
A lower energizing electrode 50 is brought into contact with the lower plate 30, and an upper energizing electrode 51 is brought into contact with the highest third upper plate 31c. Thereby, direct energizing heating was performed.

Fig. 8 illustrates an example of a laminated body having three layers in which ceramic degreased bodies are laminated, according to one embodiment of the present invention. The number of layers of the laminated ceramic degreased bodies is not limited to three, and may be multiple layers such as two, four, or five or more.
The following describes the case of two layers of ceramic degreased bodies. In the method for manufacturing a ceramic fired body of the present embodiment, the lower plate is disposed on the bottom of a first ceramic degreased body, a first upper plate is disposed on the upper surface of the first ceramic degreased body, a second ceramic degreased body is disposed on the upper surface of the first upper plate, a second upper plate is disposed on the upper surface of the second ceramic degreased body to manufacture a laminated body having two layers in which ceramic degreased bodies are laminated, and the energizing heating,is performed by applying a voltage between the lower plate and the highest upper plate.
The following describes the case of three or more layers of ceramic degreased bodies. In the method for manufacturing a ceramic fired body of the present embodiment, the lower plate is disposed on the bottom of a first ceramic degreased body, a first upper plate is disposed on the upper surface of the first ceramic degreased body, a second ceramic degreased body is disposed on the upper surface of the first upper plate, a second upper plate is disposed on the upper surface of the second ceramic degreased body, and then an other ceramic degreased body and an other upper plate are alternately disposed on the second upper plate to manufacture a laminated body having three or more layers in which ceramic degreased bodies and upper plates are laminated, and the energizing heating is performed by applying a voltage between the lower plate and the highest upper plate.

In the present embodiment, the effects of (1) to (8) described also in the first embodiment can be exerted, so can the following effects.
(10) In the method for manufacturing a ceramic fired body of the present embodiment, the lower plate is disposed on the bottom of a first ceramic degreased body, a first upper plate is disposed on the upper surface of the first ceramic degreased body, a second ceramic degreased body is disposed on the upper surface of the first upper plate, a second upper plate is disposed on the upper surface of the second ceramic degreased body to manufacture a laminated body having two layers in which ceramic degreased bodies are laminated, and the energizing heating is performed by applying a voltage between the lower plate and the highest upper plate.
In addition, in the method for manufacturing the ceramic fired body of the present embodiment, a lower plate is disposed on the bottom of a first ceramic degreased body, an upper plate is disposed on the upper surface of the first ceramic degreased body, a second upper plate is disposed on the upper surface of a second ceramic degreased body, then an other ceramic degreased body and an other upper plate are alternatively disposed on the second upper plate to manufacture a laminated body having three layers in which ceramic degreased bodies are laminated, and the energizing heating is performed by applying a voltage between the lower plate and the upper plate at the highest layer.
In the above-mentioned two methods, thus, plural ceramic degreased bodies can be energized in both up and down directions simultaneously, and a large number of honeycomb fired bodies can be efficiently manufactured.

### (Other embodiments)

The continuous firing furnace described in the first embodiment is a firing furnace in which a preheating section, a high-temperature firing section, and a cooling section are integrated. The cooling section may not be integrated with the preheating section and the high-temperature firing section, and may be a cooling device separate from the firing furnace. In this case, the cooling device is disposed on the outlet side from the high-temperature firing section, and transport objects removed from the high-temperature firing section are sequentially introduced into the cooling device.

Examples of the resistance heating mechanism used for resistance heating in the method for manufacturing a ceramic fired body of the present invention include, in addition to a graphite heater, a SiC heater, a C/C composite heater, and the like.

It is sufficient that the lower plate and the upper plate have the material and shape that enables direct energizing heating by interposing a ceramic degreased body, and these plates are not limited to carbon plates.
Examples of the material used for the lower plate and the upper plate include, in addition to carbon, SiC, a C/C composite, and the like.

The main constituent of the ceramic degreased body and the honeycomb fired body is not limited to silicon carbide. Examples of other ceramic raw materials include ceramic powders comprising: nitride ceramics such as aluminum nitride, silicon nitride, boron nitride and titanium nitride; carbide ceramics such as zirconium carbide, titanium carbide, tantalum carbide and tungsten carbide; oxide ceramics such as alumina, zirconia, cordierite, mullite, and aluminum titanate; and the like.
Of the above-mentioned possible constituents, non-oxide ceramics are desirable, and silicon carbide is particularly desirable. It is because silicon carbide is superior in heat resistance, mechanical strength, thermal conductivity, and the like. Moreover, the ceramic raw materials such as silicon-containing ceramic, in which metallic silicon is blended with the ceramics set forth above, as well as ceramic bound by silicon or silicate compounds can also be used as the constituents of the honeycomb fired body. Of these, those ceramics (silicon-containing silicon carbide) in which metallic silicon is blended with silicon carbide are desirably used.

The honeycomb structured body to be manufactured in the present embodiment is not limited to a honeycomb structured body with either one of the ends of the cells being plugged. A honeycomb structured body with either one of the ends of the cells being plugged can be preferably used as a honeycomb filter; whereas a honeycomb structured body with the cells not being plugged can be preferably used as a catalyst supporting carrier.
Accordingly, in the method for manufacturing a honeycomb structured body of the present embodiment, it is not always necessary to charge a plug material paste, but as needed.

### EXPLANATION OF SYMBOLS

- 10, 10a, 10b, 10c: Ceramic degreased body
- 20: Continuous firing furnace
- 30: Lower plate
- 31, 31a, 31b, 31c: Upper plate
- 33: Laminated body
- 40: Resistance heating mechanism
- 50: Lower electrode (energizing electrode)
- 51: Upper electrode (energizing electrode)
- 100: Honeycomb structured body
- 101: Adhesive layer
- 110: Ceramic fired body (honeycomb fired body)
- 111: Cell
- 112: Plug material
- 113: Cell wall

## Claims

1. A method for manufacturing a ceramic fired body, comprising:
molding and degreasing a ceramic raw material to manufacture a ceramic degreased body (10); and
firing said ceramic degreased body in a continuous firing furnace,
wherein
in said continuous firing furnace, a lower plate (30) is disposed on the bottom of said ceramic degreased body, an upper plate (31) is disposed on the upper surface of said ceramic degreased body, a lower energizing electrode (50) is brought into contact with said lower plate, an upper energizing electrode (51) is brought into contact with said upper plate, a resistance heating mechanism (40) is disposed over said upper plate, and another resistance heating mechanism (40) is disposed under said lower plate,
wherein
said firing comprises:
preheating said ceramic degreased body up to a preheating temperature of 1500 to 2000°C by resistance heating with said resistance heating mechanism; and
high-temperature firing, comprising:
heating said ceramic degreased body from said preheating temperature to a firing temperature of 2000 to 2300°C by both said resistance heating with said resistance heating mechanism and direct energizing heating in which said ceramic degreased body is energized and heated by applying a voltage between said lower plate and said upper plate; and
holding the temperature of said ceramic degreased body at said firing temperature.

2. The method for manufacturing a ceramic fired body according to claim 1,
wherein
the lower plate is disposed on the bottom of a first ceramic degreased body,
a first upper plate is disposed on the upper surface of the first ceramic degreased body,
a second ceramic degreased body is disposed on the upper surface of said first upper plate,
a second upper plate is disposed on the upper surface of said second ceramic degreased body to manufacture a laminated body having two layers in which ceramic degreased bodies are laminated, and
said energizing heating is performed by applying a voltage between said lower plate and the highest upper plate.

3. The method for manufacturing a ceramic fired body according to claim 1,
wherein
the lower plate is disposed on the bottom of a first ceramic degreased body,
a first upper plate is disposed on the upper surface of the first ceramic degreased body,
a second ceramic degreased body is disposed on the upper surface of said first upper plate,
a second upper plate is disposed on the upper surface of said second ceramic degreased body, and
then another ceramic degreased body and another upper plate are alternately disposed on the second upper plate to manufacture a laminated body having three or more layers in which ceramic degreased bodies are laminated, and
said energizing heating is performed by applying a voltage between said lower plate and the highest upper plate.

4. The method for manufacturing a ceramic fired body according to any one of claims 1 to 3,
wherein
plural lines of said ceramic degreased bodies are arranged in said continuous firing furnace, and plural lines of said upper and lower energizing electrodes are aligned with plural lines of said ceramic degreased bodies, and
said direct energizing heating is performed.

5. The method for manufacturing a ceramic fired body according to claim 4,
wherein in said firing
the area of said lower plate and the area of said upper plate are each larger than the area of the side face of said ceramic degreased body.

6. The method for manufacturing a ceramic fired body according to any one of claims 1 to 5,
wherein in said firing
said lower plate and said upper plate comprise carbon.

7. The method for manufacturing a ceramic fired body according to any one of claims 1 to 6,
wherein
a temperature-rise rate in said preheating is 2 to 8°C/min.

8. The method for manufacturing a ceramic fired body according to any one of claims 1 to 7,
wherein
a temperature-rise rate in said high-temperature firing is 6 to 12°C/min.

9. The method for manufacturing a ceramic fired body according to any one of claims 1 to 8,
wherein
said ceramic degreased body is manufactured to have a large number of cells (111) longitudinally disposed in parallel with one another with a cell wall interposed therebetween, and
said ceramic raw material is such that, after firing, the ceramic fired body comprises porous silicon carbide.

10. The method for manufacturing a ceramic fired body according to claim 9,
wherein
either one of the ends of each of said large number of cells is alternately plugged.

11. A method for manufacturing a honeycomb structured body,
wherein
plural ceramic fired bodies manufactured by the method for manufacturing a ceramic fired body according to any one of claims 1 to 10 are combined with one another with an adhesive layer interposed therebetween.

## Patentansprüche

1. Verfahren zum Herstellen eines gebrannten Keramikkörpers mit:
dem Formen und Entfetten eines Keramikrohmaterials, um einen entfetteten Keramikkörper (10) herzustellen, und
dem Brennen des entfetteten Keramikkörpers in einem kontinuierlichen Brennofen,
wobei
in dem kontinuierlichen Brennofen eine untere Platte (30) auf der Unterseite des entfetteten Keramikkörpers vorgesehen wird, eine obere Platte (31) auf der oberen Oberfläche des entfetteten Keramikkörpers vorgesehen wird, eine untere Stromzufuhrelektrode (50) in Kontakt mit der unteren Platte gebracht wird, eine obere Stromzufuhrelektrode (51) in Kontakt mit der oberen Platte gebracht wird, ein Widerstandsheizmechanismus (40) über der oberen Platte vorgesehen wird, und ein anderer Widerstandsheizmechanismus (40) unterhalb der unteren Platte vorgesehen wird,
wobei
das Brennen aufweist:
Vorheizen des entfetteten keramischen Körpers bis zu einer Vorheiztemperatur von 1.500 bis 2.000 °C durch Widerstandsheizen mit dem Widerstandsheizmechanismus und
Hochtemperaturbrennen mit:
dem Erhitzen des entfetteten Keramikkörpers von der Vorheiztemperatur auf eine Brenntemperatur von 2.000 bis 2.300 °C sowohl durch Widerstandsheizen mit dem Widerstandsheizmechanismus als auch durch direktes Stromzufuhrheizen, bei welchem dem entfetteten Keramikkörper durch Anlegen einer Spannung zwischen der unteren Platte und der oberen Platte Strom zugeführt und er angeheizt wird und
dem Halten der Temperatur des entfetteten Keramikkörpers auf der Brenntemperatur.

2. Verfahren zum Herstellen eines gebrannten Keramikkörpers nach Anspruch 1,
bei dem
die untere Platte auf der Unterseite eines ersten entfetteten Keramikkörpers vorgesehen wird,
eine erste obere Platte auf der oberen Oberfläche des ersten entfetteten Keramikkörpers vorgesehen wird,
ein zweiter entfetteter Keramikkörper auf der oberen Oberfläche der ersten oberen Platte vorgesehen wird,
eine zweite obere Platte auf der oberen Oberfläche des zweiten entfetteten Keramikkörpers vorgesehen wird, um einen laminierten Körper herzustellen, der zwei Schichten aufweist, in welche die entfetteten Keramikkörper laminiert sind, und
das Stromzufuhrheizen durchgeführt wird, indem eine Spannung zwischen der unteren Platte und der höchsten oberen Platte angelegt wird.

3. Verfahren zum Herstellen eines gebrannten Keramikkörpers nach Anspruch 1,
bei dem
die untere Platte auf der Unterseite eines ersten entfetteten Keramikkörpers vorgesehen wird,
eine erste obere Platte auf der oberen Oberfläche des ersten entfetteten Keramikkörpers vorgesehen wird,
ein zweiter entfetteter Keramikkörper auf der oberen Oberfläche der ersten oberen Platte vorgesehen wird,
eine zweite obere Platte auf der oberen Oberfläche des zweiten entfetteten Keramikkörpers vorgesehen wird und
dann ein anderer entfetteter Keramikkörper und eine andere obere Platte abwechselnd auf der zweiten oberen Platte vorgesehen werden, um einen laminierten Körper herzustellen, der drei oder mehr Schichten aufweist, in welche entfettete Keramikkörper laminiert sind und
das Stromzufuhrheizen durchgeführt wird, indem eine Spannung zwischen der unteren Platte und der höchsten oberen Platte angelegt wird.

4. Verfahren zum Herstellen eines gebrannten Keramikkörpers nach einem der Ansprüche 1 bis 3,
bei dem
mehrere Reihen an entfetteten Keramikkörper in dem kontinuierlichen Brennofen angeordnet sind und mehrere Reihen an oberen und unteren Stromversorgungselektroden mit mehreren Reihen der entfetteten Keramikkörper ausgerichtet werden und
das direkte Stromzufuhrheizen durchgeführt wird.

5. Verfahren zum Herstellen eines gebrannten Keramikkörpers nach Anspruch 4,
bei dem bei dem Brennen
der Flächeninhalt der unteren Platte und der Flächeninhalt der oberen Platte jeweils größer sind als der Flächeninhalt der Seitenfläche des entfetteten Keramikkörpers.

6. Verfahren zum Herstellen eines gebrannten Keramikkörpers nach einem der Ansprüche 1 bis 5,
bei dem bei dem Brennen
die untere Platte und die obere Platte Kohlenstoff aufweisen.

7. Verfahren zum Herstellen eines gebrannten Keramikkörpers nach einem der Ansprüche 1 bis 6,
bei dem
eine Temperaturanstiegsrate bei dem Vorheizen zwischen 2 und 8 °C pro Minute liegt.

8. Verfahren zum Herstellen eines gebrannten Keramikkörpers nach einem der Ansprüche 1 bis 7,
bei dem
eine Temperaturanstiegsrate bei dem Hochtemperaturbrennen zwischen 6 und 12°C pro Minute liegt.

9. Verfahren zum Herstellen eines gebrannten Keramikkörpers nach einem der Ansprüche 1 bis 8,
bei dem
der entfettete Keramikkörper so hergestellt wird, dass er eine große Anzahl an Zellen (111) aufweist, die längs parallel zueinander mit einer Zellwand dazwischen vorgesehen sind und
das Keramikrohmaterial so ist, dass der gebrannte Keramikkörper nach dem Brennen poröses Siliziumcarbid aufweist.

10. Verfahren zum Herstellen eines gebrannten Keramikkörpers nach Anspruch 9,
bei dem
jeweils eines der Enden der großen Anzahl an Zellen abwechselnd verstopft wird.

11. Verfahren zum Herstellen eines strukturierten Wabenkörpers,
bei dem
mehrere gebrannte Keramikkörper, die durch das Verfahren zum Herstellen eines gebrannten Keramikkörpers nach einem der Ansprüche 1 bis 10 hergestellt wurden, miteinander mit einer Klebeschicht dazwischen kombiniert werden.

## Revendications

1. Procédé de fabrication d'un corps cuit en céramique, comprenant :
le moulage et le dégraissage d'un matériau brut de céramique pour fabriquer un corps dégraissé en céramique (10) ; et
la cuisson dudit corps dégraissé en céramique dans un four à cuisson continue,
dans lequel
dans ledit four à cuisson continue, une plaque inférieure (30) est disposée sur le fond dudit corps dégraissé en céramique, une plaque supérieure (31) est disposée sur la surface supérieure dudit corps dégraissé en céramique, une électrode d'excitation inférieure (50) est mise en contact avec ladite plaque inférieure, une électrode d'excitation supérieure (51) est mise en contact avec ladite plaque supérieure, un mécanisme de chauffage par résistance (40) est disposé sur ladite plaque supérieure, et un autre mécanisme de chauffage par résistance (40) est disposé sous ladite plaque inférieure,
dans lequel
ladite cuisson comprend :
le préchauffage dudit corps dégraissé en céramique jusqu'à une température de préchauffage de 1 500 à 2 000°C par chauffage par résistance avec ledit mécanisme de chauffage par résistance ; et
la cuisson à haute température, comprenant :
le chauffage dudit corps dégraissé en céramique de ladite température de préchauffage jusqu'à une température de cuisson de 2 000 à 2 300°C par à la fois ledit chauffage par résistance avec ledit mécanisme de chauffage par résistance et un chauffage par excitation directe dans lequel ledit corps dégraissé en céramique est excité et chauffé en appliquant une tension entre ladite plaque inférieure et ladite plaque supérieure ; et
le maintien de la température dudit corps dégraissé en céramique à ladite température de cuisson.

2. Procédé de fabrication d'un corps cuit en céramique selon la revendication 1,
dans lequel
la plaque inférieure est disposée sur le fond d'un premier corps dégraissé en céramique,
une première plaque supérieure est disposée sur la surface supérieure du premier corps dégraissé en céramique,
un deuxième corps dégraissé en céramique est disposé sur la surface supérieure de ladite première plaque supérieure,
une deuxième plaque supérieure est disposée sur la surface supérieure dudit deuxième corps dégraissé en céramique pour fabriquer un corps stratifié ayant deux couches dans lequel des corps dégraissés en céramique sont stratifiés, et
ledit chauffage par excitation est effectué en appliquant une tension entre ladite plaque inférieure et la plaque supérieure la plus haute.

3. Procédé de fabrication d'un corps cuit en céramique selon la revendication 1,
dans lequel
la plaque inférieure est disposée sur le fond d'un premier corps dégraissé en céramique,
une première plaque supérieure est disposée sur la surface supérieure du premier corps dégraissé en céramique,
un deuxième corps dégraissé en céramique est disposé sur la surface supérieure de ladite première plaque supérieure,
une deuxième plaque supérieure est disposée sur la surface supérieure dudit deuxième corps dégraissé en céramique, et
ensuite un autre corps dégraissé en céramique et une autre plaque supérieure sont disposés de façon alternée sur la deuxième plaque supérieure pour fabriquer un corps stratifié ayant trois couches ou plus dans lequel des corps dégraissés en céramique sont stratifiés, et
ledit chauffage par excitation est effectué en appliquant une tension entre ladite plaque inférieure et la plaque supérieure la plus haute.

4. Procédé de fabrication d'un corps cuit en céramique selon l'une quelconque des revendications 1 à 3,
dans lequel
des lignes multiples desdits corps dégraissés en céramique sont agencées dans ledit four à cuisson continue, et des lignes multiples desdites électrodes d'excitation supérieure et inférieure sont alignées avec des lignes multiples desdits corps dégraissés en céramique, et
ledit chauffage par excitation directe est effectué.

5. Procédé de fabrication d'un corps cuit en céramique selon la revendication 4,
dans lequel, dans ladite cuisson,
la superficie de ladite plaque inférieure et la superficie de ladite plaque supérieure sont chacune plus grandes que la superficie de la face latérale dudit corps dégraissé en céramique.

6. Procédé de fabrication d'un corps cuit en céramique selon l'une quelconque des revendications 1 à 5,
dans lequel, dans ladite cuisson,
ladite plaque inférieure et ladite plaque supérieure comprennent du carbone.

7. Procédé de fabrication d'un corps cuit en céramique selon l'une quelconque des revendications 1 à 6,
dans lequel
une vitesse d'augmentation de température dans ledit préchauffage est 2 à 8°C/min.

8. Procédé de fabrication d'un corps cuit en céramique selon l'une quelconque des revendications 1 à 7,
dans lequel
une vitesse d'augmentation de température dans ladite cuisson à haute température est 6 à 12°C/min.

9. Procédé de fabrication d'un corps cuit en céramique selon l'une quelconque des revendications 1 à 8,
dans lequel
ledit corps dégraissé en céramique est fabriqué de façon à avoir un grand nombre de cellules (111) disposées longitudinalement en parallèle les unes avec les autres avec une paroi de cellule interposée entre celles-ci, et
ledit matériau brut de céramique est tel que, après cuisson, le corps cuit en céramique comprend du carbure de silicium poreux.

10. Procédé de fabrication d'un corps cuit en céramique selon la revendication 9,
dans lequel
l'une ou l'autre des extrémités de chacune dudit grand nombre de cellules est bouchée de façon alternée.

11. Procédé de fabrication d'un corps structuré en nid d'abeilles,
dans lequel
des corps cuits en céramique multiples fabriqués par le procédé de fabrication d'un corps cuit en céramique selon l'une quelconque des revendications 1 à 10 sont combinés les uns avec les autres avec une couche adhésive interposée entre ceux-ci.
